# EUROPÄISCHE PATENTSCHRIFT

(11) **EP 1 577 640 B1**
(45) Veröffentlichungstag und Bekanntmachung des Hinweises auf die Patenterteilung: **19.09.2007**
(21) Anmeldenummer: 04450238.3
(22) Anmeldetag: 23.12.2004
(51) Int. Cl.: G01C 5/04

(54) **Verfahren und Vorrichtung zur hydrostatischen Höhenmessung**
Method and device for hydrostatic levelling
Procédé et dispositif de mesure hydrostatique de hauteur

(30) Priorität: 18.03.2004 AT 4792004
(43) Veröffentlichungstag der Anmeldung: 21.09.2005
(73) Patentinhaber: Taferner, Marko, 9373 Klein St. Paul (AT)
(72) Erfinder: Taferner, Marko, 9373 Klein St. Paul (AT)
(74) Vertreter: Beer, Manfred

(56) Entgegenhaltungen:
- EP-A- 1 197 730
- WO-A-96/18867
- US-A- 5 517 869

## Beschreibung

Die Erfindung betrifft ein Verfahren zum Bestimmen des Längsprofils von langgestreckten Bauwerken, insbesondere im Erdreich verlegten Bauwerken, wie Rohren u.dgl., bei dem man den Höhenabstand des Bauwerkes von einem Referenzpunkt an mehreren, über die Länge des Bauwerkes verteilten Messpunkten erfasst, indem man an jedem Messpunkt den hydrostatischen Druck einer Flüssigkeitssäule zwischen dem jeweiligen Messpunkt und dem Referenzpunkt erfasst und aus dem erfassten Wert für den hydrostatischen Druck den Höhenabstand des jeweiligen Messpunktes vom Referenzpunkt errechnet.

Die Erfindung betrifft weiters eine Vorrichtung, mit der das erfindungsgemäße Verfahren ausgeführt werden kann.

Beispielsweise sollen unterirdisch verlegte Rohrleitungen, in denen ein nicht unter Druck stehendes Medium transportiert wird (Kanalrohre, Drainagerohre) ein gleichmäßiges Gefälle aufweisen, damit ein einwandfreier Transport des Mediums auf Grund der Schwerkraft gewährleistet ist. Je schwieriger die Gefällebedingungen eines derartigen Rohrsystems sind (z.B. flaches Gelände), desto wichtiger ist nicht nur das Durchschnittsgefälle, sondern auch das Erfordernis, dass das Gefälle über den Verlauf der ganzen Rohrleitung einheitlich und konstant ist, also keine Ausbauchungen in vertikaler Richtung auftreten.

Das Gefälle einer Rohrleitung kann am offenen Rohrgraben ohne Weiteres beurteilt werden.

Nach dem der Rohrgraben verschüttet worden ist, können insbesondere bei nicht einwandfreier Rohrbettung, bei schwierigen Untergrundverhältnissen, im setzungsgefährdeten Gelände und/oder durch zeitbedingte oder unvorhersehbare Belastungen von der Oberfläche her erhebliche Abweichungen des Gefälles der Rohrleitung vom Idealgefälle auftreten, welche die Funktion und Haltbarkeit des verlegten Rohrstranges negativ beeinflussen.

Es ist daher erforderlich, das Gefälle von Rohrleitungen von Zeit zu Zeit zu überprüfen, was insbesondere bei Abwasserhauptsträngen, Kanalhausanschlüssen, Abwassersystemen bei Tankstellen und Fabriken, in die Öl- oder Fettabscheider eingebaut sind, bei Drainagesystemen von Mülldeponien wesentlich und auch bei der Kollaudierung von neu verlegten Abwasserkanälen wichtig ist. Auch bei in Deponien verlegten Leitungen, die für das Sammeln und das Ableiten von Deponiegasen bestimmt sind, ist ein bestimmtes Gefälle wesentlich.

Für die Prüfung des Gefälles von Rohrleitungen wurden bislang Messgeräte verwendet, welche die durchschnittliche Rohrneigung mit Hilfe von Laserstrahlen ermitteln.

Auch Neigungsmesser in Kombination mit Kanal-TV-Kameras sind ungenau und lassen keine exakten Vergleichsmessungen in längeren Zeitabständen zu.

Aus der DE 28 10 687 A ist eine Vorrichtung zum Prüfen der Lage von im Boden verlegten Rohren bekannt. Bei der bekannten Vorrichtung ist für die Prüfung der Lage eines Rohres ein Messkopf vorgesehen, der mit einer flexiblen Schlauchleitung verbunden ist, wobei die Schlauchleitung mit einer Zugvorrichtung verbunden ist. Die Schlauchleitung reicht bis in einen Messwagen, in dem Mess- und Registriergeräte untergebracht sind. Der Messkopf ist bei der Vorrichtung gemäß der DE 28 10 687 A im Wesentlichen hülsenförmig ausgebildet und enthält einen piezoresistiven Druckaufnehmer, dessen Druckraum über eine Verbindungsschlauchleitung mit einem Vorratsbehälter mit relativ großem Querschnitt und großem Volumen verbunden ist. Beim Benützen der aus der DE 28 10 687 A bekannten Vorrichtung wird der Messkopf zunächst in das zu vermessende Rohr eingeschoben und dann möglichst gleichmäßig wieder aus dem Rohr herausgezogen. Vor dem Beginn des Herausziehens wird der Ausgangswert des auf den Druckaufnehmer über die Verbindungsschlauchleitung wirkenden hydrostatischen Drucks gemessen und Änderungen des Drucks in Abhängigkeit von der Höhenlage des Messkopfes während des Herausziehens des Messkopfes aus dem Dränrohr erfasst. Irgendwelche Korrekturen des Messergebnisses, unter Berücksichtigung des Luftdrucks oder der Temperatur sind in der DE 28 10 687 A nicht erwähnt.

Die WO 96/18867 A beschreibt ein Gerät zum Messen von Höhendifferenzen, wobei das dort beschriebene Gerät im Einmannbetrieb unter unübersichtlichen, örtlichen Bedingungen und unter wechselnden Temperatur- und Druckverhältnissen ständig ausreichend präzise Messergebnisse liefern soll. Vorgeschlagen wird hierzu eine Vorrichtung deren Messsystem völlig geschlossen ist, wobei Einflüsse das Umgebungsluftdruck durch eine flexibel Membrane im Referenzspeicher, der zusammen mit anderen Bauteilen Bestandteil der bekannten Vorrichtung nach Art einer modifizierten Schlauchwaage ist, ausgeglichen werden sollen. Neben dem Referenzspeicher besitzt die bekannte Vorrichtung eine flüssigkeitsgefüllten Verbindungsschlauch und einen Messkopf. Das in der WO 96/18867 A beschriebene Gerät wird so verwendet, dass der Referenzspeicher auf eine Aufstandsfläche (z.B. einen Boden eines Gebäudes) aufgesetzt wird und der Messkopf, der mit dem Referenzspeicher durch eine flexible Leitung (Verbindungsschlauch) verbunden ist, oberhalb der Aufstandsfläche, auf der der Referenzspeicher aufgesetzt ist, an die Stelle gebracht, die von der Aufstandsfläche einen vorgegebenen Höhenabstand besitzen soll. Es muss bei der bekannten Vorrichtung der Messkopf vom Bediener an der Messstelle angebracht und abgelesen werden. Daher ist die aus der WO 96/18867 bekannte Vorrichtung wegen der im Referenzbehälter verwendeten Membrane und der geschlossenen Ausführung für Messungen größerer Höhenunterschiede nur bedingt geeignet. Dies auch deshalb, weil bei der bekannten Vorrichtung auf eine druck- und spannungsarme, sowie auf eine horizontale Ausbildung des Referenzspiegels geachtet werden muss. Somit ist die aus der WO 96/18867 bekannte Vorrichtung ausschließlich dazu geeignet, von einem vorgegebenen Fixpunkt in die Höhe zu messen, nicht aber den Verlauf und die Lage eines Rohres zu bestimmen.

Das Dokument US-A-5 517 869 beschreibt eine hydrostatische Höhenmessung mit Über-Atmosphären-Druck in einem geschlossenen Ausgleichsgefäß am oberen Ende eines die Messflüssigkeit enthaltenden Messschlauches.

Ein Verfahren der eingangs genannten Gattung und eine zum Ausführen desselben geeignete Vorrichtung ist aus der AT 409 671 B (= EP 1 197 730 A) bekannt. Dabei wird bei der Berechnung des Höhenabstandes die gesondert erfasste Temperatur der Flüssigkeit berücksichtigt.

Aufgabe der Erfindung ist es, ein Verfahren anzugeben, mit dem die Lage von (langgestreckten) Bauwerken (beispielsweise von unterirdisch verlegte Rohrleitungen) mit höherer Genauigkeit und rascher vermessen und gegebenenfalls aufgezeichnet werden kann, als mit dem aus der AT 409 671 B bekannten Verfahren.

Gelöst wird diese Aufgabe mit einem Verfahren, das dadurch gekennzeichnet ist, dass man den hydrostatischen Druck einer an ihrem oberen Ende mit Über-Atmosphären-Druck belasteten Flüssigkeitssäule misst, wobei das obere Ende der Flüssigkeitssäule den Referenzpunkt bildet, und dass man bei der Berechnung des Höhenabstandes aus den gemessenen Werten des hydrostatischen Drucks den im Zeitpunkt der Messung gesondert erfassten Druck, der das obere Ende des Flüssigkeitssäule belastet, berücksichtigt.

Die Erfindung stellt auch eine Vorrichtung zum Durchführen des Verfahrens zur Verfügung. Diese Vorrichtung mit einem mit einer Messflüssigkeit gefüllten Messschlauch, der am unteren Ende einen Drucksensor, der in einer am unteren Ende des Messschlauches vorgesehenen Messsonde eingebaut ist, sowie wenigstens einen in der Messsonde ein gebauten Temperatursensor aufweist, wobei das obere Ende des Schlauches mit einem Ausgleichsgefäß für die Messflüssigkeit verbunden ist, ist erfindungsgemäß dadurch gekennzeichnet, dass im Bereich des geschlossenen Ausgleichsgefäßes ein Sensor zum Erfassen des Druckes im Ausgleichsgefäß vorgesehen ist.

Bevorzugte und vorteilhafte Ausgestaltungen des erfindungsgemäßen Verfahrens und der erfindungsgemäßen Vorrichtung sind Gegenstand der abhängigen Unteransprüche.

Der grundsätzliche Gedanke des erfindungsgemäßen Verfahrens beruht auf der Auswertung des hydrostatischen Druckes in einer Flüssigkeitssäule, wenn das untere Ende dieser Säule im ansteigenden oder fallenden Verlauf eines Bauwerkes, z.B. einer Rohrleitung, verschoben wird. Auf Grund der in über die Länge des Bauwerkes, vorzugsweise gleichmäßig, verteilten Messpunkten gemessenen Werte für den hydrostatischen Druck, kann der Höhenabstand zwischen dem jeweiligen Messpunkt und einem Bezugspunkt ermittelt und so der Verlauf und in weiterer Folge das Gefälle von Bauwerken, insbesondere von unterirdisch verlegten Einbauten, wie Kanalrohren, Leitungen usw., ermittelt werden.

Da bei dem erfindungsgemäßen Verfahren und der erfindungsgemäßen Vorrichtung - anders als bei der AT 409 671 B - ein geschlossenes System verwendet wird, bei dem der Druck im (geschlossenen) Ausgleichsbehälter und in der Messsonde gemessen wird (Druckdifferenzmessung) ergeben sich genauere und besser reproduzierbare Ergebnisse.

Bevorzugt werden temperaturkompensierte Drucksensoren eingesetzt.

Anwendungsmöglichkeiten des erfindungsgemäßen Verfahren und der erfindungsgemäßen Vorrichtung sind beispielsweise die folgenden:

Erfassen des Verlaufes von neu und alt verlegten Abwasserkanälen. Das ermöglicht eine genaue Überprüfung der ordnungsgemäßen Verlegung von Kanalrohren und die Beurteilung der Funktionsfähigkeit von Abwassersystemen.

Erfassen und laufendes Kontrollieren von Drainagesystemen bei Mülldeponien. Die Aufschüttung von Müll kann durch die Druckbelastung das Drainagesysteme in seiner Funktionsfähigkeit beeinflussen, indem es zu Setzungen in den Drainage-Rohrleitungen (Leitungen für Flüssigkeiten und/oder Deponiegase) kommt. Eine ständige Kontrolle ist demnach erforderlich und ermöglicht eine höhere Schüttung, wenn die Stabilität des Untergrundes nachgewiesen werden kann.

Mit Hilfe des erfindungsgemäßen Verfahrens kann das Setzungsverhalten von Bahn- und Straßentrassen und sonstigen Aufschüttungen, die insbesondere bei problematischen Untergrundverhältnissen einen Risikofaktor darstellen, ständig überprüft werden.

Überall dort, wo es notwendig ist, einen Rohrvortrieb millimetergenau zu positionieren (Hausanschlüsse, Kabelunterführungen, Düker usw.), wobei das obere Ende des Schlauches mit einem Ausgleichsgefäß für die Messflüssigkeit verbunden ist, und dessen Verlauf (insbesondere Horizontalverlauf) genau zu kennen, kann dies mit dem erfindungsgemäßen Verfahren und der erfindungsgemäßen Vorrichtung ausgeführt werden.

Mit Hilfe des erfindungsgemäßen Verfahrens und der erfindungsgemäßen Vorrichtung können auch Hangrutschungen beobachtet und kontrolliert werden, bevor diese an der Oberfläche sichtbar werden.

Mit Hilfe des erfindungsgemäßen Verfahrens und der erfindungsgemäßen Vorrichtung können auch Hausanschlüsse punktgenau vermessen werden, insbesondere im städtischen Bereich und bei grablosen Verfahren.

Insgesamt eröffnet das erfindungsgemäße Verfahren die Möglichkeit unterirdische Terrainsetzungen genau zu vermessen.

Das erfindungsgemäße Verfahren zum Bestimmen von Längsprofilen arbeitet grundsätzlich mit der Verwertung des Drucks einer Flüssigkeitssäule auf einem am zu vermessenden Bauwerk (Kanalrohr usw.) angeordneten und entlang des Bauwerkes bewegten Drucksensor (Messsonde). Bei der erfindungsgemäßen Messung, wird bei der Auswertung der vom Drucksensor erfassten Druckmesswerte auch der jeweils im Ausgleichsbehälter herrschende Druck mitberücksichtigt.

Zusätzlich kann, um Fehler der Messung durch temperaturbedingte Änderungen der Dichte der Flüssigkeit in der Flüssigkeitssäule zu eliminieren, die Temperatur im Drucksensor, die Temperatur der Flüssigkeit und/oder die Temperatur der Umgebungsluft erfasst und beim Ermitteln der Messergebnisse berücksichtigt werden.

Ein besonders genaues und reproduzierbares Messergebnis kann erzielt werden, wenn auch die Temperatur bei der Messsonde (die z.B. im Kanal angeordnet ist), die Temperatur im noch nicht im Kanal befindlichen Schlauch und die Temperatur der Umgebungsluft gemessen wird.

Auf diese Weise wird die jeweilige Dichte der Flüssigkeit in der Schlauchleitung, an deren Ende sich der Drucksensor befindet, berücksichtigt, wenn der hydrostatische Druck zur Bestimmung des Höhenstandes zwischen dem Messpunkt und dem Referenzpunkt ausgewertet wird.

Es ist also in einer Ausführungsform der Erfindung vorgesehen, dass man mit einer Kombination von mehreren Messungen, wie Druck über dem oberen Ende der Flüssigkeitssäule (z.B. im Ausgleichsbehälter), Temperatur (der Flüssigkeit in der Flüssigkeitssäule) und hydrostatischer Druck, arbeitet, um ein genaues Messergebnis, das beispielsweise eine Genauigkeit von 1 mm/Messung oder weniger hat, zu erzielen.

Mit der erfindungsgemäßen Vorrichtung, die im Prinzip ein (elektronisches) Absolut-Druckmanometer ist, können Höhendifferenzen mit Hilfe des hydrostatischen Druckes einer Flüssigkeitssäule erfasst werden. Hiezu wird das Gewicht, das die Flüssigkeitsteile auf Grund der momentanen Höhendifferenz, also der Höhendifferenz zwischen Messpunkt und Referenzpunkt im Zeitpunkt der Messung besitzt, mit Hilfe eines Drucksensors erfasst und zur Ermittlung des Höhenabstandes verwertet werden. Der Referenzpunkt dieser Flüssigkeitssäule befindet sich an ihrem oberen Ende, wobei bevorzugt ist, dass an dem oberen Ende des Schlauches, in dem die Flüssigkeitssäule enthalten ist, ein Ausgleichsgefäß vorgesehen ist. Wenn ein Ausgleichsgefäß vorgesehen ist, bleiben Änderungen des oberen Pegels der Flüssigkeitssäule klein, auch wenn sich der Querschnitt und/oder die Länge des Schlauches, in dem die Flüssigkeitssäule enthalten ist, beim Weiterbewegen der Messsonde von Messpunkt zu Messpunkt ändert.

Da das Ausgleichsgefäß geschlossen ist, braucht beim Auswerten der Messung des hydrostatischen Drucks der Luftdruck nicht mehr berücksichtigt werden. Hiezu ist bei der erfindungsgemäßen Vorrichtung ein Drucksensor zum Erfassen des Druckes über dem oberen Ende der Flüssigkeitssäule vorgesehen. Dieser den Druck über der Flüssigkeitssäule erfassende Sensor ist beispielsweise im Ausgleichsgefäß angeordnet.

Beim Arbeiten nach dem erfindungsgemäßen Verfahren und bevorzugt mit der erfindungsgemäßen Vorrichtung kann beispielsweise wie folgt vorgegangen werden, wobei die nachfolgende Beschreibung am Beispiel der Längsprofilmessung an einem Kanalrohr gegeben wird:

Vor der Bestimmung des Längsprofils des Kanalrohres wird der Kanal gereinigt, beispielsweise mit Hilfe eines Kanalhochdruckspülwagens, damit sichergestellt ist, dass die Messsonde, die beim erfindungsgemäßen Verfahren verwendet wird, auf der Rohrsohle und nicht auf dort befindlichen Ablagerungen liegt.

Nach dem Reinigen des Kanals wird dieser mit Hilfe einer Kanal-TV-Anlage überprüft. Wenn die sich zu überprüfende Rohrleitung in gereinigtem Zustand befindet, kann die Kanal-TV-Anlage aus dem Kanal entfernt werden, wobei es möglich ist, gleichzeitig in den Kanal eine Einziehschnur für das Bewegen der erfindungsgemäßen Sonde zu dem ersten Messpunkt einzubringen.

Nun wird ein Fahrzeug, auf dem die Vorrichtung zum Durchführen des Verfahrens eingebaut sein kann, vor dem einen Kanalschacht in Stellung gebracht und die Schlauchleitung ein Stück von der Schlauchkassette (Schlauchvorrat beispielsweise 250 lfm) abgezogen und mit einem kalibrierten Justierrohr justiert. Am anderen (oberen) Ende der Schlauchleitung befindet sich ein Ausgleichsbehälter dessen Entlüftungsschraube und Ventil geschlossen wird. Mit diesem Vorgang wird das Messsystem für die Eigenkontrolle justiert. Dann wird bei geöffnetem Schachtdeckel die (vorher eingebrachte) Einziehschnur an der Messsonde befestigt und die Messsonde mit dem Messschlauch in das Kanalrohr gezogen, wobei der Schlauch über Umlenkrollen im Schacht und am Messfahrzeug geführt werden kann. Das Ausziehen bzw. Einziehen des Messschlauches kann durch einen motorunterstützten Antrieb unterstützt werden. Die eingeführte Messsonde wird am ersten Messpunkt positioniert und der Messwert wird nach der Stabilisierung der Messflüssigkeit als Ausgangswert für alle weiteren Messungen hergenommen und abgespeichert. Danach kann mit den weiteren Messvorgängen begonnen werden. Hiezu wird, gegebenenfalls unterstützt durch eine motorunterstützte Schlauchrückholung, der Messschlauch ein Stück weit eingezogen und im nächsten Messpunkt positioniert. Hiezu kann an der Schlauchkassette eine automatische Längenmessvorrichtung für den Messschlauch vorgesehen sein, so dass beispielsweise Messungen in Abständen von einem Meter durchgeführt werden können.

Vor jeder Messung nach dem Weiterziehen der Messsonde ist es zweckmäßig eine Beruhigungsphase abzuwarten, damit sich die Flüssigkeit im Messschlauch beruhigt und ein stabiler Wert erreicht werden kann. Diese Beruhigungszeit kann abhängig von der Messstreckenlänge und dem Höhenunterschied zwischen Messsonde und Ausgleichsbehälter etwa 15 bis 45 s betragen.

Die Messungen werden so oft wiederholt, bis die Messsonde das Ende der zu überprüfenden Strecke erreicht hat.

Anzumerken ist, dass die Korrektur der gemessenen Werte für den hydrostatischen Druck (Drucksensor in der Messsonde) durch Einbeziehen des Druckes über dem oberen Ende der Flüssigkeitssäule der Umgebungstemperatur, der Temperatur im Bereich im Bereich der Messsonde und der Temperatur Flüssigkeit im Bereich des Schlauchvorrates mit Hilfe eines Rechnerprogramms durchgeführt werden kann, so dass bei jeder Messung ohne zusätzliche Maßnahmen richtige Werte für den Höhenabstand des Messpunktes vom Referenzpunkt aus dem von der Messsonde gemessenen hydrostatischen Druck der Flüssigkeitssäule erhalten werden.

Da auf der erfindungsgemäßen Vorrichtung ein Schlauchpaket als Vorrat für den Messschlauch vorgesehen ist, besteht die Möglichkeit Schlauchpakete mit unterschiedlicher Länge zu verwenden. Beispielsweise können Schlauchpakete mit 250 m Längen oder Schlauchpakete mit 60 m Länge verwendet werden. Beim Auswerten der von der Drucksensor in der Messsonde erfassten, hydrostatischen Drucks wird auch die Länge des Schlauchpaketes mitberücksichtigt. Dies erfolgt beispielsweise so, dass die Länge der Messstrecke und die Schachttiefe berücksichtigt werden. Damit wird Folgendes berücksichtigt. Beispielsweise wird im Jänner bei einer Außentemperatur von -15°C eine Messung in Sickerwasser-Rohrleitungen in einer Mülldeponie vorgenommen, die selbst eine Temperatur von +80°C hat. Dies ergibt einen Temperaturunterschied von 95°C. Das Schlauchpaket hat eine Länge von 250 m, die Prüfstrecke beträgt 50 m, die Schachttiefe 5 m. Das bedeutet, dass von den 250 m des Schlauchpaketes 55 m eine Temperatur von +80°C und 195 m eine Temperatur von -15°C haben. Das heißt, dass die Dichte der Flüssigkeit im Messschlauch unterschiedlich ist. Auch diese temperaturbedingten Dichteunterschiede können durch das Rechenprogramm beim Auswerten des vom Drucksensor in der Messsonde erfassten, hydrostatischen Drucks berücksichtigt werden.

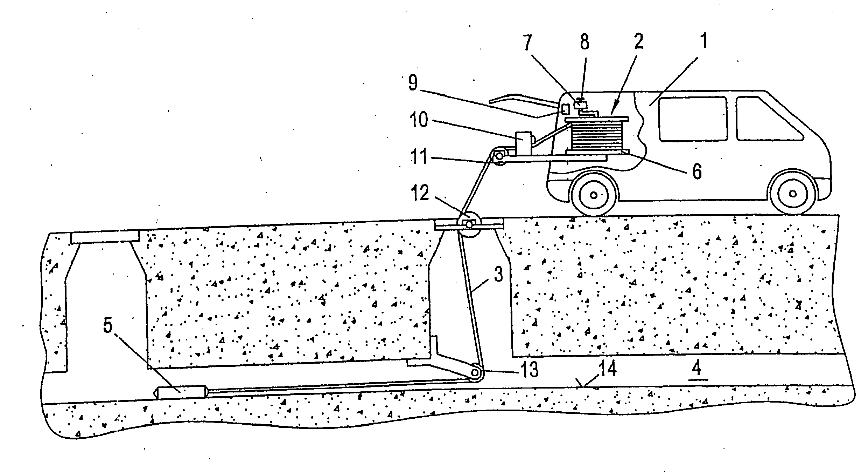

Nachstehend wird unter Bezugnahme auf die angeschlossenen Zeichnung ein Ausführungsbeispiel für eine Anordnung zum Durchführen des erfindungsgemäßen Verfahrens beschrieben. Die Zeichnung zeigt eine Vorrichtung zum Bestimmen des Längsprofils eines Kanalrohres zwischen zwei Kanalschächten.

In einem Fahrzeug 1 ist eine Schlauchkassette 2 mit einem Schlauchvorrat für den Messschlauch von beispielsweise 250 m oder 60 m vorgesehen. An dem einen Ende des Schlauches 3, das im Ausführungsbeispiel bereits in dem Kanal 4 angeordnet ist, ist eine Messsonde 5 befestigt. Das andere Ende des über eine Haspel 6 geführten Schlauches endet in einem Ausgleichsbehälter 7, der oben mit einer Entlüftungsschraube 8 versehen ist. Dem Ausgleichsbehälter 7 ist eine Messeinrichtung 9, in welcher der Drucksensor für das Bestimmen des Druckes im beim Benützen der Vorrichtung geschlossenen Ausgleichsdruckgefäß 7 und ein Rechner für das Auswerten der Messdaten für den hydrostatischen Druck, den Druck im Ausgleichsbehälter 7 und die Temperatur untergebracht sind, vorgesehen. Die Messeinrichtung 9 enthält auch verschiedene Bedienungsschalter, Anzeigeeinrichtungen (Displays) und Steuereinrichtungen, die z.B. die Abstände zwischen den Messpunkten festlegen. Das Bewegen des Messschlauches 3 kann durch Drehen der Schlauchkassette(-haspel) 6 von Hand aus oder mit Hilfe eines Motors erfolgen. Um das Bewegen des Messschlauches 3 zu erleichtern, ist eine von Hand aus betätigbare und/oder motorangetriebene Vorschubeinrichtung 10 vorgesehen, der auch eine Einrichtung zum Messen der vor- bzw. zurückgezogenen Länge des Schlauches 3 zugeordnet sein kann. Der Messschlauch 3 läuft dann über Umlenkrollen 11,12,13 bis zur Sohle 14 des Kanals 4 und bis zur Messsonde 5. In der Messsonde 5 ist in deren Längsmitte ein Drucksensor und an deren vorderem Ende ein Temperatursensor untergebracht, wobei die Kabel für die Datenübertragung durch den Messschlauch 3 laufen. Beim Verwenden der beschriebenen Vorrichtung werden in jedem Messpunkt folgende Werte erfasst:
- Druck im Ausgleichsbehälter über der Flüssigkeitssäule
- Druck der Flüssigkeitssäule vom Ausgleichsbehälter auf den Druck-Sensor in der Messsonde,
- Temperatur im Drucksensor,
- Temperatur der Flüssigkeit,
- Temperatur der Luft und
- die Länge des gesamten Schlauchpaketes (beispielsweise 250 m oder 60 m).

Diese Messwerte werden durch das Rechenprogramm zur Berechnung des Messergebnisses herangezogen.

Mit dem beschriebenen Verfahren der Erfindung und mit Hilfe der ebenfalls beschriebenen erfindungsgemäßen Vorrichtung kann der Verlauf (das Längsprofil) eines Rohres 4 zwischen zwei Schächten 23 und 24 ermittelt werden.

Mit der beschriebenen Vorrichtung zum Bestimmen von Längsprofilen von Bauwerken kann auch ein System zur Dokumentation des Ortes und der Zeit der durchgeführten Messung kombiniert werden. Dies kann beispielsweise dadurch erfolgen, dass mit dem Rechenprogramm eine GPS-Vorrichtung und eine Echtzeituhr kombiniert werden.

Im Rahmen der Erfindung kann eine große Genauigkeit der Messungen von Druck und Temperatur erreicht werden, wenn in der Messsonde ein Drucksensor mit integriertem Temperatursensor verwendet wird.

Die erfassten Messwerte werden über eine serielle Datenleitung, die den (kombinierten) Druck-Temperatur-Sensor auch mit Energie versorgt, an den Rechner weitergeleitet. Über die Datenleitung können zusätzlich zu dem Wert für den gemessenen Druck auch die Temperatur des Sensors, der Sensortyp und die Sensornummer mitübertragen werden. So ist es möglich, den angeschlossenen Sensor durch den Rechner automatisch zu erkennen. Der Druck, der auf die mit ihrem oberen Ende im Ausgleichsgefäß angeordnete Flüssigkeitssäule wirkt, wird durch den dem Ausgleichsbehälter 7 zugeordneten Druck-Sensor erfasst und rechnerisch im Rechner berücksichtigt, wenn der vom Drucksensor erfasste hydrostatische Druck zum Ermitteln des Höhenabstandes zwischen Messpunkt und Referenzpunkt ausgewertet wird.

Die Dichte der verwendeten Flüssigkeit im Messschlauch zum Zeitpunkt der Messung und die von der Messsonde sowie von dem den Luftdruck erfassenden Druckmesser empfangenen Daten werden durch Zeit und Datum der eingebauten Echtzeituhr sowie den Koordinaten des integrierten GPS-Systems in einem RAM-Speicher im Rechner abgelegt. Über eine Schnittstelle können diese Daten über einen PC ausgelesen und ausgewertet werden.

Von Vorteil ist es, wenn jede Messung für die spätere Auswertung mit einer individuellen Kennung für Projekt und Ort gekennzeichnet wird. Dies ist beispielsweise mit Hilfe des integrierten GPS-Systems und die integrierte Echtzeituhr möglich.

Das erfindungsgemäße Verfahren und die erfindungsgemäße Vorrichtung erlauben folgende, beispielhaft genannten Einsatzmöglichkeiten:

Der genaue Gefälleverlauf von Kanalrohren nach der Verschüttung des Rohrgrabens im Zuge der Bauabnahme kann ermittelt werden. Damit ist eine objektiv dokumentierte Beurteilung der Verlegqualität einwandfrei möglich. Bauchbildungen in den Rohrleitungen können festgestellt und innerhalb der Gewährleistungsfrist behoben werden. So können spätere Funktionsstörungen, die zusätzliche Pflege und Instandhaltungsaufwand verursachen, verhindert werden.

Das Gefälle von Drainagesystemen in Mülldeponien kann exakt vermessen und damit sein Funktionszustand überprüft werden. Schlecht funktionierende Drainagesysteme können zu erheblichen Untergrundkontaminationen führen. Die Stabilität des Untergrundes und dessen genaue Beobachtung erlauben eine höhere Aufschüttung der Mülldeponie, wenn es zu keinem Absenken des Terrains und Gefährdung der Drainagen kommt. Höhere Aufschüttung spart kostbare Deponiefläche und im Grenzfall die Anlage einer neuen Deponie. Die gleichzeitige Messung der Temperatur lässt Rückschlüsse auf die Vergasung und sonstiger Reaktionen innerhalb des Müllkörpers zu.

Die Setzung von Erddämmen, Baukörpern von Strassen und Eisenbahnen können frühzeitig erkannt werden, da diese Setzungen im Untergrund nachgewiesen werden können, bevor sichtbare Auswirkungen an der Oberfläche auftreten. Eine Früherkennung von Sicherheitsrisiken kann Schäden vorbeugen bzw. vermeiden helfen.

Hangrutschungen können durch Kontrollmessungen frühzeitig erkannt werden, da sich eine Erdbewegung im Untergrund abzeichnet, bevor die ersten Anzeichen an der Oberfläche sichtbar werden.

Zusammenfassend kann ein Ausführungsbeispiel der Erfindung wie folgt dargestellt werden:

Zum Bestimmen des Längsprofils von im Erdreich verlegten Rohrleitungen wird der hydrostatische Druck einer Flüssigkeitssäule zwischen über die Länge des Bauwerkes verteilten Messpunkten und einem Referenzpunkt erfasst und aus den erfassten Werten der Höhenabstand des jeweiligen Messpunktes vom Referenzpunkt errechnet. Zum Ausführen dieses Verfahren wird ein mit Flüssigkeit gefüllter Schlauch 3 verwendet, der am unteren Ende einen Drucksensor zum Erfassen des hydrostatischen Druckes aufweist, und der an seinem obere Ende mit einem beim Ausführen der Messung geschlossenen Ausgleichsgefäß 7 für die Messflüssigkeit verbunden ist. Dem Ausgleichsgefäß 7 ist ein Drucksensor 9 zum Erfassen des Druckes zugeordnet. Der im Ausgleichsbehälter 7 herrschende Druck und die herrschende Temperatur, welche gesondert erfasst wird, und die Dichte der Messflüssigkeit beeinflusst, werden beim Auswerten der erfassten Werte für den hydrostatischen Druck berücksichtigt. Für jeden Messvorgang wird die Position des Messsystems und der Zeitpunkt des Messvorganges über GPS erfasst und registriert.

## Patentansprüche

1. Verfahren zum Bestimmen des Längsprofils von langgestreckten Bauwerken, insbesondere im Erdreich verlegten Bauwerken, wie Rohren u.dgl., bei dem man den Höhenabstand des Bauwerkes von einem Referenzpunkt an mehreren, über die Länge des Bauwerkes verteilten Messpunkten erfasst, indem man an jedem Messpunkt den hydrostatischen Druck einer Flüssigkeitssäule zwischen dem jeweiligen Messpunkt und dem Referenzpunkt erfasst und unter Berücksichtigung der gesondert erfassten Temperatur der Flüssigkeit aus dem erfassten Wert für den hydrostatischen Druck den Höhenabstand des jeweiligen Messpunktes vom Referenzpunkt errechnet, **dadurch gekennzeichnet, dass** man den hydrostatischen Druck einer an ihrem oberen Ende mit Über-Atmosphären-Druck belasteten Flüssigkeitssäule misst, wobei das obere Ende der Flüssigkeitssäule den Referenzpunkt bildet, und dass man bei der Berechnung des Höhenabstandes aus den gemessenen Werten des hydrostatischen Drucks den im Zeitpunkt der Messung gesondert erfassten Druck, der das obere Ende des Flüssigkeitssäule belastet, berücksichtigt.

2. Verfahren nach Anspruch 1, **dadurch gekennzeichnet, dass** man die Temperatur der Flüssigkeitssäule sowohl am Messpunkt als auch am Referenzpunkt erfasst.

3. Verfahren nach Anspruch 1 oder 2, **dadurch gekennzeichnet, dass** man das untere Ende der Flüssigkeitssäule schrittweise von Messpunkt zu Messpunkt bewegt.

4. Verfahren nach Anspruch 3, **dadurch gekennzeichnet, dass** man nach dem Weiterbewegen des unteren Endes der Flüssigkeitssäule zu dem nächsten Messpunkt vor der nächsten Messung des hydrostatischen Drucks zuwartet, bis sich die Flüssigkeitssäule beruhigt hat.

5. Verfahren nach einem der Ansprüche 1 bis 4, **dadurch gekennzeichnet, dass** man den Zeitpunkt jeder Messung erfasst.

6. Verfahren nach einem der Ansprüche 1 bis 5, **dadurch gekennzeichnet, dass** man den Ort jeder Messung erfasst.

7. Verfahren nach einem der Ansprüche 1 bis 6, **dadurch gekennzeichnet, dass** man die Druck- und Temperatursensoren vor dem Beginn einer Messung justiert.

8. Vorrichtung zum Durchführen des Verfahren nach einem der Ansprüche 1 bis 7, mit einem mit einer Messflüssigkeit gefüllten Messschlauch (3), der am unteren Ende einen Drucksensor, der in einer am unteren Ende des Messschlauches (3) vorgesehenen Messsonde (5) eingebaut ist, aufweist, wobei das obere Ende des Schlauches (3) mit einem Ausgleichsgefäß (7) für die Messflüssigkeit verbunden ist, und wobei wenigstens in der Messsonde (5) ein Temperatursensor eingebaut ist **dadurch gekennzeichnet, dass** im Bereich des geschlossenen Ausgleichsgefäßes (7) ein Sensor (9) zum Erfassen des Druckes im Ausgleichsgefäß (7) vorgesehen ist.

9. Vorrichtung nach Anspruch 8, **dadurch gekennzeichnet, dass** die Leitungen für das Weiterleiten der vom Drucksensor und vom Temperatursensor an der Messsonde (5) erfassten Daten im Inneren des Messschlauches (3) geführt sind.

10. Vorrichtung nach Anspruch 8 oder 9, **dadurch gekennzeichnet, dass** das Ausgleichsgefäß (7) eine Entlüftungsschraube (8) aufweist.

11. Vorrichtung nach einem der Ansprüche 8 bis 10, **dadurch gekennzeichnet, dass** ein Vorrat an Messschlauch (3) vorgegebener Länge auf einer Schlauchhaspel (6) aufgewickelt ist.

12. Vorrichtung nach einem der Ansprüche 8 bis 11, **dadurch gekennzeichnet, dass** im Bereich des Vorrats an Messschlauch (3) ein weiterer Temperatursensor vorgesehen ist.

13. Vorrichtung nach einem der Ansprüche 8 bis 12, **dadurch gekennzeichnet, dass** eine motorisch oder händisch angetriebene Schlauchfördervorrichtung (10) zum Bewegen des Messschlauches (3) vorgesehen ist.

14. Vorrichtung nach einem der Ansprüche 8 bis 13, **dadurch gekennzeichnet, dass** dem Messschlauch (3) eine Längenmessvorrichtung zum Erfassen des Verschiebeweges des Schlauches (3) und damit der Messsonde (5) zugeordnet ist.

15. Vorrichtung nach einem der Ansprüche 8 bis 14, **dadurch gekennzeichnet, dass** ein Rechner vorgesehen ist, in den die erfassten Daten für hydrostatischen Druck, Temperaturen und atmosphärischen Luftdruck sowie gegebenenfalls durch GPS erfasste Zeit und Ort der Messung eingegeben werden, und mit dem der Höhenabstand zwischen dem jeweiligen Messpunkt und dem durch das Ausgleichsgefäß (7) gebildeten Referenzpunkt errechnet wird.

## Claims

1. Method for determining the longitudinal profile of extended constructions, in particular constructions laid in the ground such as pipes and the like, in which the vertical distance of the construction from a reference point is determined at multiple measurement points distributed over the length of the construction, in that the hydrostatic pressure of a liquid column between the respective measurement point and the reference point is determined at each measurement point, and, taking into consideration the separately determined temperature of the liquid, the vertical distance of the respective measurement point from the reference point is calculated from the determined value for the hydrostatic pressure, **characterised in that** the hydrostatic pressure of a liquid column subjected to overpressure at its upper end is measured, wherein the upper end of the liquid column forms the reference point, and that the pressure acting on the upper end of the liquid column determined separately at the time of the measurement is taken into consideration in the calculation of the vertical distance from the measured values of the hydrostatic pressure.

2. Method according to Claim 1, **characterised in that** the temperature of the liquid column is detected both at the measurement point and at the reference point.

3. Method according to Claim 1 or 2, **characterised in that** the lower end of the liquid column is moved stepwise from measurement point to measurement point.

4. Method according to Claim 3, **characterised in that** after moving the lower end of the liquid column on to the next measurement point, there is a pause before the next measurement of the hydrostatic pressure until the liquid column has steadied.

5. Method according to one of Claims 1 to 4, **characterised in that** the time of each measurement is determined.

6. Method according to one of Claims 1 to 5, **characterised in that** the location of each measurement is determined.

7. Method according to one of Claims I to 6, **characterised in that** the pressure and temperature sensors are adjusted before the start of a measurement.

8. Device for performing the method according to one of Claims 1 to 7, with a measurement hose (3) filled with a measuring liquid, which at the lower end has a pressure sensor installed in a measuring probe (5) provided on the lower end of the measurement hose (3), wherein the upper end of the hose (3) is connected to an equalising vessel (7) for the measuring liquid, and wherein a temperature sensor is installed at least in the measuring probe (5), **characterised in that** a sensor (9) is provided in the region of the closed equalising vessel (7) to determine the pressure in the equalising vessel (7).

9. Device according to Claim 8, **characterised in that** the lines for forwarding data detected by the pressure sensor and by the temperature sensor on the measuring probe (5) are disposed in the interior of the measurement hose (3).

10. Device according to Claim 8 or 9, **characterised in that** the equalising vessel (7) has a vent screw (8).

11. Device according to one of Claims 8 to 10, **characterised in that** a reserve supply of measurement hose (3) of given length is wound on a hose reel (6).

12. Device according to one of Claims 8 to 11, **characterised in that** a further temperature sensor is provided in the region of the reserve supply of measurement hose (3).

13. Device according to one of Claims 8 to 12, **characterised in that** a motor- or hand-driven hose transport device (10) is provided to move the measurement hose (3).

14. Device according to one of Claims 8 to 13, **characterised in that** the measurement hose (3) has an associated length measurement device for determining the displacement path of the hose (3) and thus of the measuring probe (5).

15. Device according to one of Claims 8 to 14, **characterised in that** a computer is provided, into which the detected data for hydrostatic pressure, temperatures and atmospheric air temperature as well as possibly the time and location of the measurement determined by GPS are input, and with which the vertical distance between the respective measurement point and the reference point formed by the equalising vessel (7) is calculated.

## Revendications

1. Procédé de détermination du profil longitudinal d'ouvrages s'étendant en longueur, en particulier d'ouvrages enterrés, tels que conduites, etc., pour lesquels est saisie la distance en hauteur de l'ouvrage entre un point de référence et plusieurs points de mesure répartis sur la longueur de l'ouvrage, en captant sur chaque point de mesure la pression hydrostatique d'une colonne de liquide entre le point de mesure correspondant et le point de référence et en tenant compte de la température du liquide captée séparément, et en calculant la hauteur entre le point de mesure correspondant et le point de référence à partir de la valeur saisie pour la pression hydrostatique, **caractérisé en ce que** la pression hydrostatique d'une colonne de liquide soumise à une pression suratmosphérique à son extrémité supérieure est mesurée, l'extrémité supérieure de la colonne de liquide constituant le point de référence, et **en ce qu'**il est tenu compte de la pression séparément saisie au moment de la mesure, à laquelle l'extrémité supérieure de la colonne de liquide est soumise, pour le calcul de la hauteur à partir des valeurs mesurées pour la pression hydrostatique.

2. Procédé selon la revendication 1, **caractérisé en ce que** la température de la colonne de liquide est captée au point de mesure ainsi qu'au point de référence.

3. Procédé selon la revendication 1 ou la revendication 2, **caractérisé en ce que** l'extrémité inférieure de la colonne de liquide est graduellement déplacée d'un point de mesure à l'autre.

4. Procédé selon la revendication 3, **caractérisé en ce qu'**après un déplacement de l'extrémité inférieure de la colonne de liquide vers le prochain point de mesure, il est attendu jusqu'à ce que la colonne de liquide se soit stabilisée avant de procéder à la mesure suivante de la pression hydrostatique.

5. Procédé selon l'une des revendications 1 à 4, **caractérisé en ce que** le moment de chaque mesure est saisi.

6. Procédé selon l'une des revendications 1 à 5, **caractérisé en ce que** l'emplacement de chaque mesure est saisi.

7. Procédé selon l'une des revendications 1 à 6, **caractérisé en ce que** les capteurs de pression et de température sont réglés avant le début de chaque mesure.

8. Dispositif pour l'exécution du procédé selon l'une des revendications 1 à 7, avec un tuyau de mesure (3) rempli d'un liquide de mesure, comportant à l'extrémité inférieure un capteur de pression monté dans une sonde de mesure (5) prévue à l'extrémité inférieure du tuyau de mesure (3), l'extrémité supérieure du tuyau (3) étant reliée à un vase d'expansion (7) pour le liquide de mesure, et un capteur de température au moins étant monté dans la sonde de mesure (5), **caractérisé en ce qu'**un capteur (9) pour la saisie de la pression dans le vase d'expansion (7) est prévu au niveau du vase d'expansion (7) fermé.

9. Dispositif selon la revendication 8, **caractérisé en ce que** les lignes pour la transmission des données saisies par le capteur de pression et par le capteur de température sur la sonde de mesure (5) passent à l'intérieur du tuyau de mesure (3).

10. Dispositif selon la revendication 8 ou la revendication 9, **caractérisé en ce que** le vase d'expansion (7) comporte un bouchon de purge d'air (8).

11. Dispositif selon l'une des revendications 8 à 10, **caractérisé en ce qu'**une réserve de tuyau de mesure (3) d'une longueur définie est enroulée sur dévidoir (6).

12. Dispositif selon l'une des revendications 8 à 11, **caractérisé en ce qu'**un autre capteur de température est prévu au niveau de la réserve de tuyau de mesure (3) .

13. Dispositif selon l'une des revendications 8 à 12, **caractérisé en ce qu'**un dispositif de transport de tuyau (10) motorisé ou manuel est prévu pour le déplacement du tuyau de mesure (3).

14. Dispositif selon l'une des revendications 8 à 13, **caractérisé en ce qu'**un dispositif de mesure de longueur pour la saisie de la course de déplacement du tuyau (3) et donc de la sonde de mesure (5) équipe le tuyau de mesure (3).

15. Dispositif selon l'une des revendications 8 à 14, **caractérisé en ce qu'**un ordinateur est prévu, où sont entrées les données saisies pour la pression hydrostatique, les températures et la pression atmosphérique, et le cas échéant pour le moment et le lieu de la mesure saisis par GPS, et au moyen duquel est calculée la hauteur entre le point de mesure correspondant et le point de référence constitué par le vase d'expansion (7).
